# EUROPEAN PATENT APPLICATION

(11) **EP 4 625 675 A2**
(43) Date of publication of application: **01.10.2025**
(21) Application number: 25195064.8
(22) Date of filing: 10.08.2023
(51) Int. Cl.: H01M 50/477

(54) **POWER STORAGE DEVICE, REINFORCEMENT COMPONENT, AND METHOD FOR MANUFACTURING POWER STORAGE DEVICE**

(30) Priority: 12.08.2022 JP 2022128878
(62) Divisional of application: 23852633.9
(71) Applicant: Dai Nippon Printing Co., Ltd., Tokyo 162-8001 (JP)
(72) Inventor: SASAKI, Miho, Tokyo, 1628001 (JP); OKUMURA, Shohei, Tokyo, 1628001 (JP); KANDA, Nobuyuki, Tokyo, 1628001 (JP); URIU, Toshibumi, Tokyo, 1628001 (JP); SHIRAISHI, Takeshi, Tokyo, 1628001 (JP); MATSUMOTO, Yutaka, Tokyo, 1628001 (JP)
(74) Representative: Müller-Boré & Partner Patentanwälte PartG mbB

(57) **Abstract**

An electrical storage device comprising: an electrode assembly; an electrode terminal electrically connected to the electrode assembly; a reinforcement component disposed on a lateral side of the electrode assembly; and an exterior film packaging the electrode assembly and the reinforcement component, wherein the electrode assembly and the reinforcement component are disposed separately, the exterior film includes an expansion portion located at a portion between the electrode assembly and the reinforcement component, and the expansion portion is configured to be capable of expanding when the exterior film expands with an increase in internal pressure of the electrical storage device.

## Description

### Technical Field

The present invention relates to an electrical storage device, a reinforcement component that is used for an electrical storage device, and a method for manufacturing an electrical storage device.

### Background Art

PTL 1 discloses an all-solid-state battery as an example of an electrical storage device. The all-solid-state battery includes an electrode assembly, an electrode terminal, and an outer packaging that seals the electrode assembly. The outer packaging includes an exterior film wound around the electrode assembly so as to have an opening, and a lid disposed at the opening. One end part of the electrode terminal is electrically connected to the electrode assembly. The other end part of the electrode terminal is exposed to the outside of the lid. The electrode terminal extends through the lid.

### Citation List

### Patent Literature

PTL 1: Japanese Patent Laid-open Publication No. 2019-153504

### Summary of Invention

### Technical Problem

**In** the electrical storage device, a gap may be formed between the lid and the electrode terminal extending through the lid. Therefore, the airtightness of the electrical storage device is low.

The present invention provides an electrical storage device having high airtightness, a reinforcement component that is used for the electrical storage device, and a method for manufacturing the electrical storage device.

### Solution to Problem

An electrical storage device according to a first aspect of the present invention includes an electrode assembly, an electrode terminal electrically connected to the electrode assembly, a reinforcement component disposed on a lateral side of the electrode assembly, and an exterior film packaging the electrode assembly and the reinforcement component, in which the electrode terminal includes an exposed portion which is a portion exposed to the outside on a side opposite to the electrode assembly with respect to the reinforcement component, and a part of the exposed portion is joined to the exterior film.

An electrical storage device according to a second aspect of the present invention is the electrical storage device according to the first aspect, in which the reinforcement component includes at least a separate first part and second part.

An electrical storage device according to a third aspect of the present invention is the electrical storage device according to the first or second aspect, in which the electrode assembly includes a current collector, and the reinforcement component includes a concave portion in which the current collector is housed.

An electrical storage device according to a fourth aspect of the present invention is the electrical storage device according to the first or second aspect, in which the electrode assembly includes a current collector, and the reinforcement component is a frame having a space in which the current collector is disposed.

An electrical storage device according to a fifth aspect of the present invention is the electrical storage device according to any one of the first to third aspects, in which the reinforcement component has a plate shape, and has a hole into which the electrode terminal is inserted.

An electrical storage device according to a sixth aspect of the present invention is the electrical storage device according to the first or second aspect, in which the reinforcement component includes a main body portion, and a movable portion connected to the main body portion and joined to the exterior film, and the movable portion is configured to move with respect to the main body portion when the exterior film expands with an increase in internal pressure of the electrical storage device.

An electrical storage device according to a seventh aspect of the present invention is the electrical storage device according to the first or second aspect, in which the reinforcement component includes a first surface facing the electrode assembly, and a second surface connected to the first surface and extending in a direction opposite to the electrode assembly, and the second surface slopes toward a center of the reinforcement component in a height direction with increasing distance in the direction opposite to the electrode assembly.

An electrical storage device according to an eighth aspect of the present invention is the electrical storage device according to the first or second aspect, in which the reinforcement component includes a main body portion, and a stretched portion extending toward the electrode assembly from the main body portion, and the stretched portion tapers with decreasing distance from the electrode assembly.

An electrical storage device according to a ninth aspect of the present invention is the electrical storage device according to any one of the first to eighth aspects, including a buffering film disposed inside the exterior film and intended to enhance strength of the exterior film, in which the buffering film is disposed on at least one of a corner of the electrode assembly and a corner of the reinforcement component.

An electrical storage device according to a tenth aspect of the present invention is the electrical storage device according to any one of the first to ninth aspects, in which the electrode assembly and the reinforcement component are disposed separately, the exterior film includes an expansion portion located at a portion between the electrode assembly and the reinforcement component, and the expansion portion is configured to be capable of expanding when the exterior film expands with an increase in internal pressure of the electrical storage device.

An electrical storage device according to an eleventh aspect of the present invention includes an electrode assembly, an electrode terminal electrically connected to the electrode assembly, a reinforcement component disposed on a lateral side of the electrode assembly, and an exterior film packaging the electrode assembly and the reinforcement component, in which the reinforcement component includes a main body portion, and a movable portion connected to the main body portion and joined to the exterior film, and the movable portion is configured to move with respect to the main body portion when the exterior film expands with an increase in internal pressure of the electrical storage device.

An electrical storage device according to a twelfth aspect of the present invention includes an electrode assembly, an electrode terminal electrically connected to the electrode assembly, a reinforcement component disposed on a lateral side of the electrode assembly, and an exterior film packaging the electrode assembly and the reinforcement component, in which the reinforcement component includes a first surface facing the electrode assembly, and a second surface connected to the first surface and extending in a direction opposite to the electrode assembly, and the second surface slopes toward a center of the reinforcement component in a height direction with increasing distance in the direction opposite to the electrode assembly.

An electrical storage device according to a thirteenth aspect of the present invention includes an electrode assembly, an electrode terminal electrically connected to the electrode assembly, a reinforcement component disposed on a lateral side of the electrode assembly, and an exterior film packaging the electrode assembly and the reinforcement component, in which the reinforcement component includes a main body portion, and a stretched portion extending toward the electrode assembly from the main body portion, and the stretched portion tapers with decreasing distance from the electrode assembly.

An electrical storage device according to a fourteenth aspect of the present invention includes an electrode assembly, an electrode terminal electrically connected to the electrode assembly, a reinforcement component disposed on a lateral side of the electrode assembly, an exterior film packaging the electrode assembly and the reinforcement component, and a buffering film disposed inside the exterior film and intended to enhance strength of the exterior film, in which the buffering film is disposed on at least one of a corner of the electrode assembly and a corner of the reinforcement component.

An electrical storage device according to a fifteenth aspect of the present invention includes an electrode assembly, an electrode terminal electrically connected to the electrode assembly, a reinforcement component disposed on a lateral side of the electrode assembly, and an exterior film packaging the electrode assembly and the reinforcement component, in which the electrode assembly and the reinforcement component are disposed separately, the exterior film includes an expansion portion located at a portion between the electrode assembly and the reinforcement component, and the expansion portion is configured to be capable of expanding when the exterior film expands with an increase in internal pressure of the electrical storage device.

An electrical storage device according to a sixteenth aspect of the present invention is the electrical storage device according to any one of the eleventh to fifteenth aspects, in which the reinforcement component includes at least a separate first part and second part.

An electrical storage device according to a seventeenth aspect of the present invention is the electrical storage device according to any one of the eleventh to fifteenth aspects, in which the electrode assembly includes a current collector, and the reinforcement component includes a concave portion in which the current collector is housed.

An electrical storage device according to an eighteenth aspect of the present invention is the electrical storage device according to any one of the eleventh to fifteenth aspects, in which the reinforcement component has a plate shape, and has a hole into which the electrode terminal is inserted.

A reinforcement component according to a nineteenth aspect of the present invention is used for the electrical storage device according to any one of the first to eighteenth aspects.

A reinforcement component according to a twentieth aspect of the present invention is the reinforcement component according to the nineteenth aspect, to which the electrode terminal is joined.

A method for manufacturing an electrical storage device according to a twenty-first aspect of the present invention is a method for manufacturing an electrical storage device including an electrode assembly, an electrode terminal electrically connected to the electrode assembly, a reinforcement component disposed on a lateral side of the electrode assembly, and an exterior film packaging the electrode assembly and the reinforcement component. The electrode terminal includes an exposed portion which is a portion exposed to the outside on a side opposite to the electrode assembly with respect to the reinforcement component, and a part of the exposed portion is joined to the exterior film. The method for manufacturing an electrical storage device includes a connection step of electrically connecting the electrode assembly and the electrode terminal, a disposition step of disposing the reinforcement component so as to form the exposed portion after the connection step, a packaging step of packaging the reinforcement component and the electrode assembly with the exterior film after the disposition step, and a sealing step of joining the exterior film and the exposed portion after the packaging step.

A method for manufacturing an electrical storage device according to a twenty-second aspect of the present invention is the method for manufacturing an electrical storage device according to the twenty-first aspect, in which in the disposition step, the reinforcement component is insert molded on the electrode terminal connected to the electrode assembly.

### Advantageous Effects of Invention

According to the present invention, it is possible to provide an electrical storage device having high airtightness, a reinforcement component that is used for the electrical storage device, and a method for manufacturing the electrical storage device. Brief Description of Drawings
[Fig. 1] Fig. 1 is a perspective view of an electrical storage device according to an embodiment.
[Fig. 2] Fig. 2 is a plan view of the electrical storage device of Fig. 1.
[Fig. 3] Fig. 3 is a sectional view showing a layer configuration of an exterior film of the electrical storage device of Fig. 1.
[Fig. 4] Fig. 4 is a perspective view of a reinforcement component of the electrical storage device of Fig. 1.
[Fig. 5] Fig. 5 is a sectional view taken along line D5-D5 in Fig. 2.
[Fig. 6] Fig. 6 is a flowchart showing an example of a method for manufacturing the electrical storage device of Fig. 1.
[Fig. 7] Fig. 7 is a sectional view of an electrical storage device of a first modification.
[Fig. 8] Fig. 8 is a sectional view of an electrical storage device of a second modification.
[Fig. 9] Fig. 9 is a perspective view of a reinforcement component of an electrical storage device of a third modification.
[Fig. 10] Fig. 10 is a sectional view of the electrical storage device of the third modification.
[Fig. 11] Fig. 11 is a sectional view of the electrical storage device of Fig. 10 in which the internal pressure of an outer packaging increases.
[Fig. 12] Fig. 12 is a perspective view of a reinforcement component of the electrical storage device of a fourth modification.
[Fig. 13] Fig. 13 is a sectional view of the electrical storage device of the fourth modification.
[Fig. 14] Fig. 14 is a perspective view of a reinforcement component of an electrical storage device of a fifth modification.
[Fig. 15] Fig. 15 is a sectional view of the electrical storage device of the fifth modification.
[Fig. 16] Fig. 16 is a sectional view of an electrical storage device of a sixth modification.
[Fig. 17] Fig. 17 is a sectional view of an electrical storage device of a seventh modification.
[Fig. 18] Fig. 18 is a sectional view of an electrical storage device of an eighth modification.
[Fig. 19] Fig. 19 is a plan view of an electrical storage device according to another modification of the embodiment.
[Fig. 20] Fig. 20 is a side view of the electrical storage device of Fig. 19.
[Fig. 21] Fig. 21 is a plan view of an electrical storage device according to still another modification of the embodiment.

### Description of Embodiments

Hereinafter, an electrical storage device according to an embodiment of the present invention will be described with reference to the drawings. In the drawings, like or equivalent parts are denoted by like symbols, and the descriptions thereof are not repeated. In the present embodiment, a numerical range indicated by the term "A to B" means "A or more" and "B or less". For example, the expression of "2 to 15 mm" means 2 mm or more and 15 mm or less. In numerical ranges serially described in the present embodiment, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range.

### [1. Embodiment]

### <1-1. Configuration of electrical storage device>

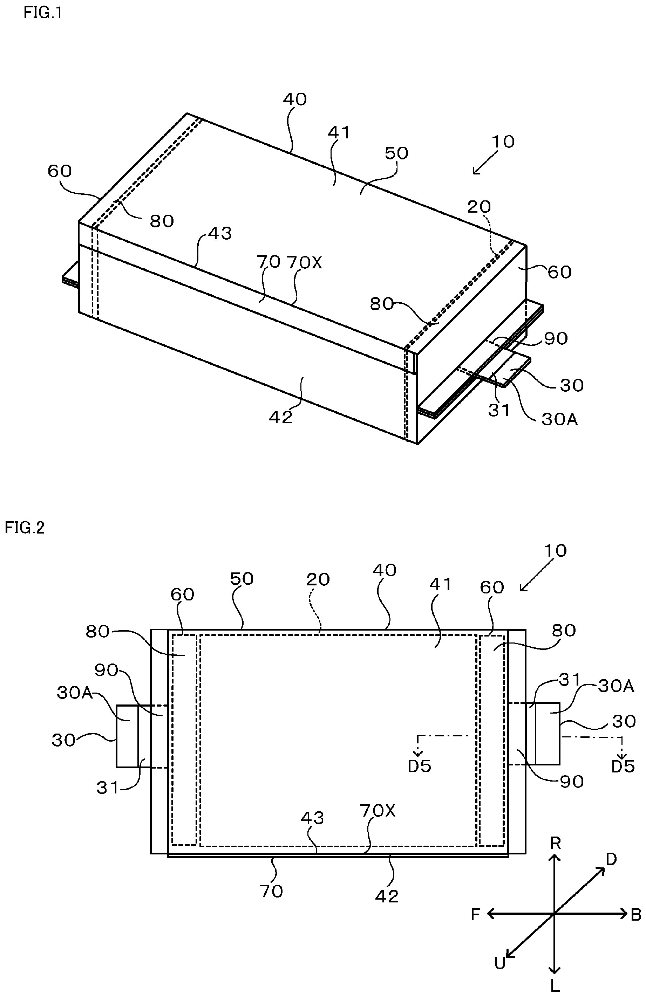

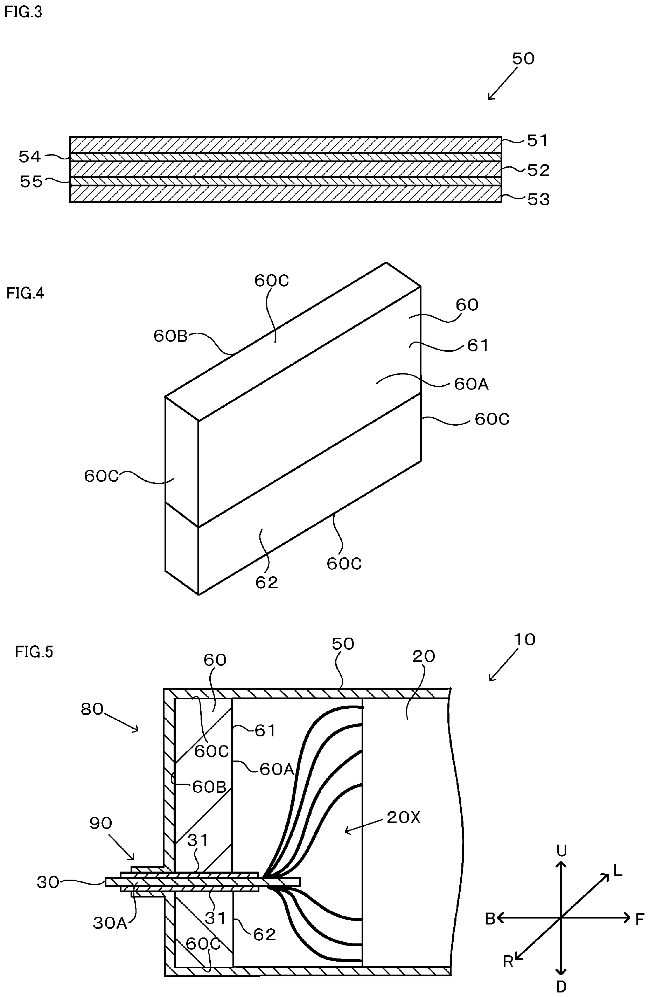

Fig. 1 is a perspective view schematically showing an electrical storage device 10 of an embodiment. Fig. 2 is a plan view of the electrical storage device 10 of Fig. 1. Fig. 3 is a sectional view showing a layer configuration of an exterior film 50 of the electrical storage device 10 of Fig. 1. Fig. 4 is a perspective view of a reinforcement component 60 of the electrical storage device 10 of Fig. 1. Fig. 5 is a sectional view taken along line D5-D5 in Fig. 2. In Figs. 2 and 5, the direction along arrow UD indicates a thickness direction of the electrical storage device 10, and the direction along arrow LR indicates a width direction of the electrical storage device 10. The direction along arrow FB indicates a depth direction of the electrical storage device 10. The directions indicated by each of arrows UD, LR, and FB are also shared with the subsequent drawings.

The electrical storage device 10 includes an electrode assembly 20, an electrode terminal 30, and an outer packaging 40. The electrode assembly 20 includes, for example, electrodes (a positive electrode and a negative electrode) forming an electrical storage member of a lithium ion battery, a capacitor or an all-solid-state battery. In the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

In the present embodiment, the electrical storage device 10 includes two electrode terminals 30. The electrode terminal 30 is a metal terminal for use in input and output of electrical power in the electrode assembly 20. One end part of the electrode terminal 30 is connected to a current collector 20X, and thus electrically connected to an electrode (positive electrode or negative electrode) in the electrode assembly 20. The other end part of the electrode terminal 30 protrudes outward from an end edge of the outer packaging 40, for example.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the reinforcement component 60. The exterior film 50 packages the electrode assembly 20, and the reinforcement component 60 disposed on a lateral side of the electrode assembly 20. In the present embodiment, one exterior film 50 is wound around the electrode assembly 20 and the reinforcement component 60. The exterior film 50 is preferably wound around the electrode assembly 20 and the reinforcement component 60 along the machine direction (MD).

The electrode terminal 30 is joined to the reinforcement component 60 such that it includes an exposed portion 30A which is a portion exposed to the outside on a side opposite to the electrode assembly 20 with respect to the reinforcement component 60. It is preferable that an adhesion film 31 is joined to the electrode terminal 30 from the viewpoint of suitably joining the electrode terminal 30 and the reinforcement component 60. The adhesion film 31 can be arbitrarily selected as long as it is a film capable of bonding the electrode terminal 30 formed of a metal and the reinforcement component 60 formed of a resin. For the adhesion film 31, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesion film 31 can be a film having a single layer or two or more layers of any of the above-mentioned resins. If necessary, a gas absorbent, a water absorbent and the like may be added to a material for forming the adhesion film 31. When a gas absorbent is added to the material for forming the adhesion film 31, it is possible to absorb gas that exists in the electrical storage device 10 and is leaking to the outside of the electrical storage device, and gas that is entering the electrical storage device 10 from the outside of the electrical storage device 10. When a water absorbent is added to the material for forming the adhesion film 31, it is possible to absorb moisture that exists in the electrical storage device 10 and is leaking to the outside of the electrical storage device, and moisture that is entering the electrical storage device 10 from the outside of the electrical storage device 10. As the water absorbent, a known water absorbent can be used, and an inorganic water absorbent can be preferably used. Specific examples of the preferred inorganic water absorbent include calcium oxide, anhydrous magnesium sulfate, magnesium oxide, calcium chloride, zeolite, aluminum oxide, silica gel, alumina gel, and dried alum. As the gas absorbent, a known gas absorbent can be used. The gas absorbent is, for example, hydrophobic zeolite in which the molar ratio of SiO₂ to Al₂O₃ is 1/1 to 2000/1, bentonite, sepiolite, calcium oxide, copper oxide, or zinc oxide. In the present embodiment, the adhesion film 31 is joined to substantially the whole of a portion of the electrode terminal 30 which is covered with the reinforcement component 60, and a portion of the electrode terminal 30 which is joined to the exterior film 50 for forming a terminal sealing portion 90 described later.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance is deteriorated. On the other hand, in the present embodiment, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. When the electrical storage device 10 is an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

As shown in Fig. 3, the exterior film 50 is, for example, a laminate (laminate film) including a base material layer 51, a barrier layer 52 and a heat-sealable resin layer 53 in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 5 to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets. When the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacture method described in International Publication No. WO 2022/092231. The barrier layer 52 may be formed only of a recycled material, or may be formed of a mixed material of a recycled material and a virgin material. The metal recycled material is a metal material obtained by, for example, collecting, isolating and purifying various products used in what is called a city, wastes from manufacture processes, and the like, so that the material can be reused. The virgin material from a metal material is a new metal material obtained by refining a metal natural resource (raw material), which is not a recycled material.

The aluminum alloy is more preferably a soft aluminum alloy foil formed of, for example, an annealed aluminum alloy from the viewpoint of improving the moldability of the exterior film 50, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain the exterior film 50 having more excellent moldability. When the content of iron is 9.0 mass% or less, it is possible to obtain the exterior film 50 more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing the exterior film 50 further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the barrier layer 52 is a metal foil, the barrier layer 3 may perform a function as a barrier layer suppressing at least ingress of moisture, and has a thickness of, for example, about 5 to 200 µm. The thickness of the barrier layer 52 is preferably about 85 µm or less, more preferably about 50 µm or less, still more preferably about 40 µm or less, particularly preferably about 35 µm or less. The thickness of the barrier layer 52 is preferably about 10 µm or more, more preferably about 20 µm or more, still more preferably about 25 µm or more. The total thickness of the barrier layer 52 is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 52 is formed of an aluminum alloy foil, the thickness thereof is especially preferably in above-described range. From the viewpoint of imparting high moldability and high rigidity to the exterior film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. When the exterior film 50 has high moldability, deep drawing molding can be facilitated to contribute to an increase in capacity of the electrical storage device. When the capacity of the electrical storage device is increased, the weight of the electrical storage device increases, but the enhancement of the rigidity of the exterior film 50 can contribute to high hermeticity of the electrical storage device. In particular, when the barrier layer 52 includes a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 1 mm, more preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 1 mm to 10 mm, 1 mm to 5 mm, 1 mm to 2 mm, 0.5 mm to 10 mm, 0.5 mm to 5 mm or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

In the present embodiment, with the exterior film 50 wound around the electrode assembly 20 and the reinforcement component 60, surfaces of the exterior film 50 which face each other (heat-sealable resin layer 53) are heat-sealed to form a first sealing portion 70. In the present embodiment, the first sealing portion 70 extends in a longitudinal direction (FB direction) of the outer packaging 40. In the outer packaging 40, a location at which the first sealing portion 70 is formed can be arbitrarily selected. In the present embodiment, a root 70X of the first sealing portion 70 is preferably located on a side 43 of a boundary between the first surface 41 and the second surface 42 of the outer packaging 40. The first surface 41 has a larger area over the second surface 42. The root 70X of the first sealing portion 70 may be located on an arbitrary surface of the outer packaging 40. In the present embodiment, for example, the first sealing portion 70 is folded toward the second surface 42 of the outer packaging 40. The first sealing portion 70 may protrude outward with respect to the electrode assembly 20 in plan view, or may be folded toward the first surface 41.

The reinforcement component 60 generally has, for example, a cuboid shape, and is made from, a resin material. The reinforcement component 60 is a lid that seals the lateral side of the electrode assembly 20. Examples of the material for forming the reinforcement component 60 include polyester-based resins such as polyethylene terephthalate-based resins and polybutylene terephthalate-based resins, polyolefin-based resins such as polyethylene-based resins, fluorine-based resins and polypropylene-based resins, cyclic polyolefin-based resins, or acid-modified polyolefin-based resins obtained by graft-modifying the polyolefin-based resin with an acid such as maleic anhydride. The material forming the reinforcement component 60 can also be selected according to, for example, a specific example of the electrical storage device 10. When the electrical storage device 10 is a lithium ion secondary battery, the material for forming the reinforcement component 60 is preferably a material having electrolytic solution resistance or a material having hydrofluoric acid resistance. When the electrical storage device 10 is an all-solid-state battery, the material for forming the reinforcement component 60 is preferably a material having hydrogen sulfide resistance. If necessary, a gas absorbent, a water absorbent and the like may be added to a material for forming the reinforcement component 60. When a gas absorbent is added to the material for forming the reinforcement component 60, it is possible to absorb gas that exists in the electrical storage device 10 and is leaking to the outside of the electrical storage device 10, and gas that is entering the electrical storage device 10 from the outside of the electrical storage device 10. When a water absorbent is added to the material for forming the reinforcement component 60, it is possible to absorb moisture that exists in the electrical storage device 10 and is leaking to the outside of the electrical storage device 10, and moisture that is entering the electrical storage device 10 from the outside of the electrical storage device 10. As the water absorbent, a known water absorbent can be used, and an inorganic water absorbent can be preferably used. Specific examples of the preferred inorganic water absorbent include calcium oxide, anhydrous magnesium sulfate, magnesium oxide, calcium chloride, zeolite, aluminum oxide, silica gel, alumina gel, and dried alum. As the gas absorbent, a known gas absorbent can be used. The gas absorbent is, for example, hydrophobic zeolite in which the molar ratio of SiO₂ to Al₂O₃ is 1/1 to 2000/1, bentonite, sepiolite, calcium oxide, copper oxide, or zinc oxide.

From the viewpoint of suitably heat-sealing the reinforcement component 60 and the exterior film 50, the main components of materials for forming the reinforcement component 60 and materials for forming the heat-sealable resin layer 53 of the exterior film 50 are preferably the same. In the present embodiment, examples of the main component of the material for forming the reinforcement component 60 and the material for forming the heat-sealable resin layer 53 include polyolefin-based resins such as polyethylene-based resins and polypropylene-based resins, and acid-modified polyolefin-based resins obtained by graft-modifying the polyolefin-based resin with an acid such as maleic anhydride. Note that the main component refers to, for example, a material that accounts for 50% or more of the materials contained in a constituent element.

The reinforcement component 60 may be a metal molded article as well as a resin molded article. When the reinforcement component 60 is a metal molded article, for example, an aluminum-based material, a titanium-based material, a nickel-based material, a copper-based material, a stainless-based material, an iron-based material or a titanium-based material can be used as the material for forming the reinforcement component 60. When the reinforcement component 60 is a metal molded article or a resin molded article, the reinforcement component 60 is preferably thick enough to suppress deformation of the outer packaging 40 even if electrical storage devices 10 are stacked on top of another. From another point of view, when the reinforcement component 60 is a metal molded article or a resin molded article, a lateral surface 60C of the reinforcement component 60 is preferably thick enough to ensure that the lateral surface 60C of the reinforcement component 60 and the exterior film 50 can be suitably heat-sealed in formation of a second sealing portion 80. The minimum value of the thickness of the reinforcement component 60 is, for example, 1.0 mm, more preferably 3 mm, still more preferably 4 mm. The maximum value of the thickness of the reinforcement component 60 is, for example, 10 mm, more preferably 8.0 mm, still more preferably 7.0 mm. The maximum value of the thickness of the reinforcement component 60 may be 10 mm or more. The thickness of the material for forming the reinforcement component 60 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present embodiment, when the reinforcement component 60 is described as a metal molded article or a resin molded article, the material for forming the reinforcement component 60 does not include a film defined by Japanese Industrial Standard (JIS), Packaging Terminology Standard. The thickness of the reinforcement component 60 may vary depending on a portion of the reinforcement component 60. When the thickness of the reinforcement component 60 varies depending on a portion, the thickness of the thickest portion of the reinforcement component 60 is defined as a thickness of the reinforcement component 60. These specifications about the reinforcement component 60 can also be applied to the following modifications.

In the present embodiment, the reinforcement component 60 includes a separate first part 61 and second part 62 for suitably disposing the electrode terminal 30 at a desired location. The first part 61 is disposed on the upper side with respect to the second part 62. The reinforcement component 60 may include three or more parts. When the reinforcement component 60 includes a plurality of separate parts, at least two parts may be made from different materials. It is preferable that the first part 61 and the second part 62 are joined to the electrode terminal 30 by at least one selected from ultrasonic sealing, high-frequency sealing, heat sealing, heat plate welding, infrared welding and an adhesive, and with the adhesion film 31 interposed therebetween if necessary. Since the electrode terminal 30 and the reinforcement component 60 are firmly joined, the electrode terminal 30 can be suitably held by the reinforcement component 60. When the adhesion film 31 is not joined to the electrode terminal 30, it is preferable that the first part 61 and the second part 62 are joined to the electrode terminal 30 by an adhesive. Examples of the adhesive include an adhesive for use in hot melting or dry lamination.

The shape of the first part 61 and the shape of the second part 62 can be arbitrarily selected as long as the electrode terminal 30 can be sandwiched so as to enable input and output of electrical power through the electrode terminal 30. It is preferable that the first part 61 and the second part 62 are substantially identical in shape. In the embodiment, the length of the first part 61 in the UD direction is larger than the length of the second part 62 in the UD direction. Therefore, the electrode terminal 30 is located below the center of the reinforcement component 60 in the UD direction. The electrode terminal 30 may be located at the center of the reinforcement component 60 or above the center in the UD direction.

As shown in Fig. 4, the reinforcement component 60 has a first surface 60A facing the electrode assembly 20, a second surface 60B that is opposite to the first surface 60A, and a lateral surface 60C connecting the first surface 60A and the second surface 60B, in a state where the first part 61 and the second part 62 are combined.

As shown in Fig. 5, in the present embodiment, the second sealing portion 80 is formed by heat-sealing the exterior film 50 and the second surface 60B and the lateral surface 60C of the reinforcement component 60. Further, in the present embodiment, the terminal sealing portion 90 is formed by joining the exterior film 50 and the exposed portion 30A of the electrode terminal 30 from the viewpoint of enhancing the airtightness of the outer packaging 40. In the terminal sealing portion 90, the exterior film 50 and the exposed portion 30A are joined with the adhesion film 31 interposed therebetween if necessary. In the present embodiment, it is only required to form at least the terminal sealing portion 90, of the second sealing portion 80 and the terminal sealing portion 90. In other words, in the present embodiment, the exterior film 50 and at least one of the second surface 60B and the lateral surface 60C of the reinforcement component 60 is not required to be joined.

### <1-2. Method for manufacturing electrical storage device>

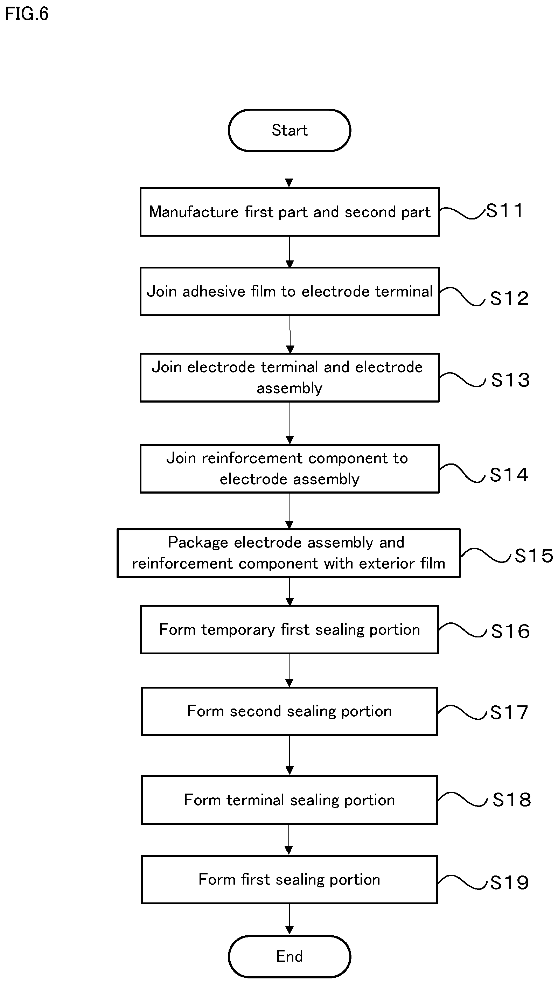

Fig. 6 is a flowchart showing an example of a method for manufacturing the electrical storage device 10. The method for manufacturing the electrical storage device 10 includes, for example, a first step, a second step, a third step, a fourth step, a fifth step, a sixth step, a seventh step, an eighth step and a ninth step. The first to ninth steps are carried out by, for example, an apparatus for manufacturing the electrical storage device 10. In the present embodiment, the term "first to ninth steps" refers to conveniently assigned names of the steps, and does not mean the order of the steps.

In the first step as step S11, the manufacturing apparatus manufactures the first part 61 and the second part 62.

The second step as step S12 is carried out after the first step. In the second step, the manufacturing apparatus joins the adhesion film 31 to the electrode terminal 30. The second step may be carried out before the first step.

The third step as step S13 (connection step) is carried out after the second step. In the third step, the manufacturing apparatus electrically connects the electrode terminal 30 and the electrode assembly 20 by connecting the electrode terminal 30 and the current collector 20X. The third step may be carried out before the second step.

The fourth step as step S14 (disposition step) is carried out after the first step, the second step or the third step. In the fourth step, the manufacturing apparatus sandwiches the electrode terminal 30 between the first part 61 and the second part 62. The manufacturing apparatus joins the first part 61 and second part 62 and the electrode terminal 30 by, for example, at least one selected from ultrasonic sealing, high-frequency sealing, heat sealing, heat plate welding, infrared welding, and an adhesive. When the fourth step is completed, the electrode terminal 30 and the reinforcement component 60 are joined.

The fifth step as step S15 (packaging step) is carried out after the fourth step. In the fifth step, the manufacturing apparatus packages the electrode assembly 20 and the reinforcement component 60 with the exterior film 50.

The sixth step as step S16 is carried out after the fifth step. In the fifth step, the manufacturing apparatus heat-seals the opposed heat-sealable resin layers 53 of the exterior film 50 to form a first sealing portion 70, a part of which is an unsealing portion (hereinafter, referred to as a "temporary first sealing portion"). The unsealing portion can be formed by using, for example, a seal bar having a shape such that a part of the sealing bar does not come into contact with the exterior film 50. In another example, the unsealing portion can be formed by interposing a fluororesin film or the like between surfaces (heat-sealable resin layers 53) of the exterior film 50, which face each other. By forming the temporary first sealing portion before formation of the second sealing portion 80 and the terminal sealing portion 90, the electrode assembly 20 can be held by the exterior film 50, so that the location of the electrode assembly 20 is unlikely to shift with respect to the exterior film 50. This suppresses generation of wrinkles during formation of the second sealing portion 80 and the terminal sealing portion 90.

The seventh step as step S17 is carried out after the sixth step. In the seventh step, the manufacturing apparatus forms the second sealing portion 80 by heat-sealing the exterior film 50 and the second surface 60B and the lateral surface 60C of the reinforcement component 60.

The eighth step as step S18 (sealing step) is carried out after the seventh step. In the eighth step, the manufacturing apparatus forms the terminal sealing portion 90 by heat-sealing the exterior film 50 and the exposed portion 30A of the electrode terminal 30. The eighth step may be carried out before the seventh step.

The ninth step as step S19 is carried out after the seventh step or the eighth step. In the ninth step, the manufacturing apparatus injects an electrolytic solution from the unsealing portion of the temporary first sealing portion, evacuates the exterior film 50, and then heat-seals the unsealing portion to form the first sealing portion 70. When the electrical storage device 10 is an all-solid-state battery, the step of inj ecting an electrolytic solution in the ninth step is omitted.

### <1-3. Action and effect of electrical storage device>

In the electrical storage device 10, even if there is a gap in the electrode assembly 20 and the first part 61 and the second part 62 of the reinforcement component 60, the gap is closed by the exterior film 50 because the terminal sealing portion 90 is provided. Therefore, the airtightness of the electrical storage device 10 is enhanced.

### [2. First modification of embodiment]

An electrical storage device 210 according to a first modification of the embodiment (hereinafter, referred to as a "first modification") has the same configuration as in the embodiment except that a reinforcement component 260 is provided. Hereinafter, the electrical storage device 210 according to the first modification will be described mainly for portions different from those in the embodiment.

### <2-1. Configuration of electrical storage device>

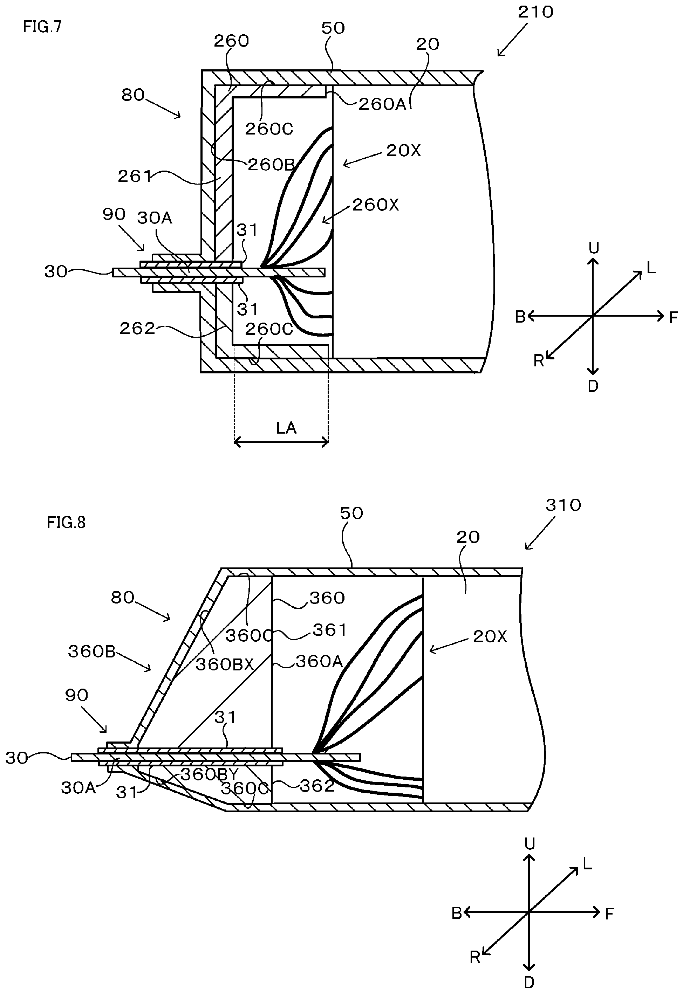

Fig. 7 is a sectional view of the electrical storage device 210 according to the first modification. The electrical storage device 210 includes the reinforcement component 260. The reinforcement component 260 is a lid that seals the lateral side of the electrode assembly 20. The reinforcement component 260 includes a separate first part 261 and second part 262. The first part 261 is disposed on the upper side with respect to the second part 262. The reinforcement component 260 has a first surface 260A facing the electrode assembly 20, a second surface 260B that is opposite to the first surface 260A, and a lateral surface 260C connecting the first surface 260A and the second surface 260B, in a state where the first part 261 and the second part 262 are combined.

In the first modification, the reinforcement component 260 includes a concave portion 260X in which at least one of the current collector 20X is housed from the viewpoint of decreasing the distance between the reinforcement component 260 and the electrode assembly 20 in the FB direction. In the first modification, the concave portion 260X has a size large enough to house substantially the whole of the current collector 20X. The concave portion 260X protrudes downward from the first surface 260A toward the second surface 260B. The concave portion 260X does not extend through the first surface 260A and the second surface 260B. A depth LA of the concave portion 260X in the FB direction can be arbitrarily selected. From the viewpoint of housing a larger number of current collectors 20X, the depth LA is preferably equal to or more than half of the length of the lateral surface 260C in the FB direction.

### <2-2. Action and effect of electrical storage device>

The electrical storage device 210 according to the first modification has the same action and effect as the electrical storage device 10 according to the embodiment. Further, in the electrical storage device 210, the distance between the reinforcement component 260 and the electrode assembly 20 in the FB direction can be reduced because at least a part of the current collector 20X is housed in the concave portion 260X of the reinforcement component 260. Therefore, the electrical storage device 210 can be downsized.

### [3. Second modification of embodiment]

An electrical storage device 310 according to a second modification of the embodiment (hereinafter, referred to as a "second modification") has the same configuration as in the embodiment except that a reinforcement component 360 is provided. Hereinafter, the electrical storage device 310 according to the second modification will be described mainly for portions different from those in the embodiment.

### <3-1. Configuration of electrical storage device>

Fig. 8 is a sectional view of the electrical storage device 310 according to the second modification. The electrical storage device 310 includes the reinforcement component 360. The reinforcement component 360 is a lid that seals the lateral side of the electrode assembly 20. Depending on the shape of the reinforcement component 360, it may be impossible to suitably seal the electrode assembly 20 due to breakage of the exterior film 50 or generation of wrinkles in the exterior film 50. The electrical storage device 310 according to the second modification is configured to be capable of suitably sealing the electrode assembly 20. The reinforcement component 360 includes a separate first part 361 and second part 362. The first part 361 is disposed on the upper side with respect to the second part 362. The reinforcement component 360 has a first surface 360A facing the electrode assembly 20, a second surface 360B that is opposite to the first surface 360A, and a lateral surface 360C connecting the first surface 360A and the second surface 360B, in a state where the first part 361 and the second part 362 are combined.

The second surface 360B is divided into a first sloping surface 360BX formed on the first part 361 and a second sloping surface 360BY formed on the second part 362. The first sloping surface 360BX and the second sloping surface 360BY extend in a direction opposite to the electrode assembly 20. The first sloping surface 360BX and the second sloping surface 360BY slope toward the center of the reinforcement component 360 in the height direction (UD direction) with increasing distance in a direction opposite to the electrode assembly 20. In other words, the first sloping surface 360BX and the second sloping surface 360BY slope toward the electrode terminal 30 with increasing distance in a direction opposite to the electrode assembly 20. Therefore, the first sloping surface 360BX and the second sloping surface 360BY approach each other with increasing distance in a direction opposite to the electrode assembly 20. Since the second surface 360B has a large area, a large part of the exterior film 50 and the second surface 60B are joined at the second sealing portion 80. Therefore, the airtightness of the electrical storage device 310 is enhanced.

In the second modification, the angle formed by the first sloping surface 360BX and the second sloping surface 360BY and the lateral surface 360C is more than 90 degrees from the viewpoint of suppressing breakage of the exterior film 50 and generation of wrinkles in the exterior film 50 at the sealing portion 80. In the electrical storage device 310 according to the second modification, the terminal sealing portion 90 can be omitted.

### <3-2. Action and effect of electrical storage device>

The electrical storage device 310 according to the second modification has the same action and effect as the electrical storage device 10 according to the embodiment. Further, in the electrical storage device 310, the angle formed by the first sloping surface 360BX and the second sloping surface 360BY and the lateral surface 360C is more than 90 degrees. Since the corner of the boundary between the lateral surface 360C and the second surface 360B has an obtuse angle, breakage of the exterior film 50 is suppressed. Further, generation of wrinkles in the exterior film 50 during formation of the second sealing portion 80 is suppressed.

### [4. Third modification of embodiment]

An electrical storage device 410 according to a third modification of the embodiment (hereinafter, referred to as a "third modification") has the same configuration as in the embodiment except that a reinforcement component 460 is provided. Hereinafter, the electrical storage device 410 according to the third modification will be described mainly for portions different from those in the embodiment.

### <4-1. Configuration of electrical storage device>

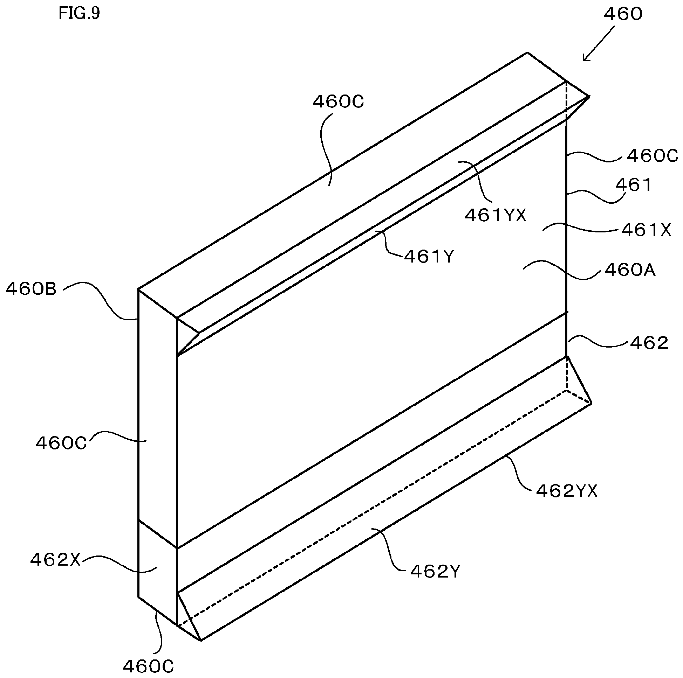

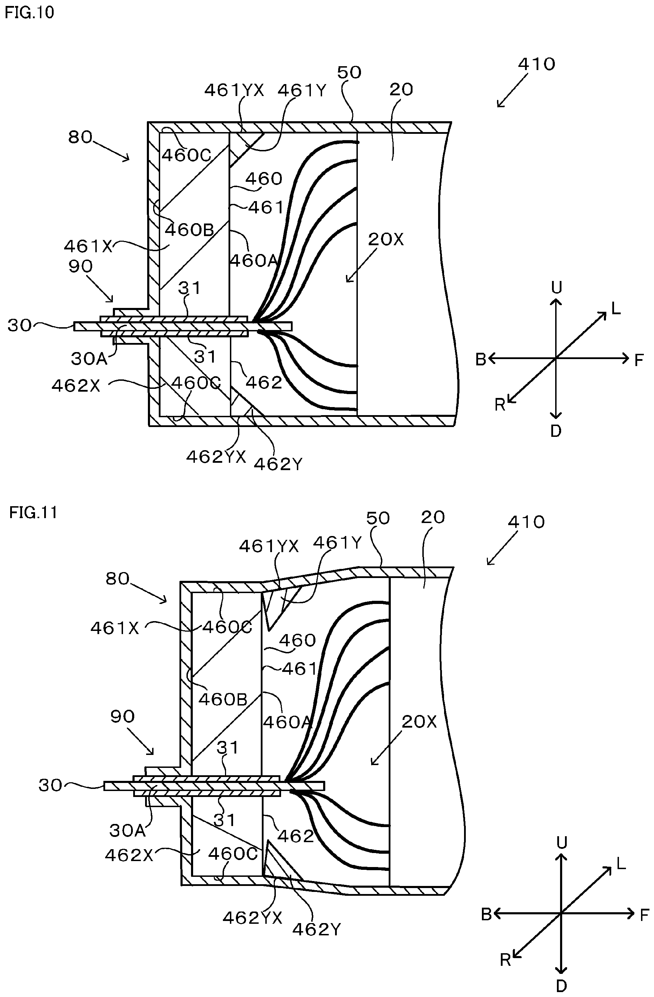

Fig. 9 is a perspective view of the reinforcement component 460 of the electrical storage device 410 according to the third modification. Fig. 10 is a sectional view of the electrical storage device 410. Fig. 11 is a sectional view of the electrical storage device 410 of Fig. 10 in which the internal pressure of an outer packaging 40 increases. In the electrical storage device 410, use for a long time may lead to an increase in internal pressure of the outer packaging 40 due to at least one of generation of gas and expansion of the electrode assembly 20. If the internal pressure of the outer packaging 40 increases, the exterior film 50 may peel from the reinforcement component 460. If the exterior film 50 peels from the reinforcement component 460, the electrode assembly 20 can not be suitably sealed. The electrical storage device 410 according to the third modification is configured to be capable of suitably sealing the electrode assembly 20.

As shown in Fig. 9, the reinforcement component 460 includes a separate first part 461 and second part 462. The reinforcement component 460 is a lid that seals the lateral side of the electrode assembly 20. The first part 461 is disposed on the lower side with respect to the second part 462. The reinforcement component 460 has a first surface 460A facing the electrode assembly 20, a second surface 460B that is opposite to the first surface 460A, and a lateral surface 460C connecting the first surface 460A and the second surface 460B, in a state where the first part 461 and the second part 462 are combined.

The first part 461 includes a main body portion 461X and a movable portion 461Y that moves with respect to the main body portion 461X. The second part 462 includes a main body portion 462X and a movable portion 462Y that moves with respect to the main body portion 462X. The main body portions 461X and 462X form the first surface 460A, the second surface 460B and the lateral surface 460C.

The movable portion 461Y, 462Y moves with respect to the main body portion 461X, 462X when the exterior film 50 expands with expansion of the electrode assembly 20. The movable portion 461Y is connected to the main body portion 461X only at the upper end part of the first surface 460A. The movable portion 462Y is connected to the main body portion 462X only at the lower end part of the first surface 460A. The main body portion 461X, 462X and the movable portion 461Y, 462Y may be integrally formed, or may be separately formed and joined.

The shape of the movable portion 461Y, 462Y can be arbitrarily selected as long as it enables movement with respect to the main body portion 461X, 462X. In the third modification, the movable portion 461Y, 462Y has a triangular prism shape extending in the LR direction. In the LR direction, the relationship between the length of the movable portion 461Y, 462Y and the length of the main body portion 461X, 462X can be arbitrarily selected. In the third modification, the length of the movable portion 461Y, 462Y is substantially equal to the length of the main body portion 461X, 462X in the LR direction. In the LR direction, the length of the movable portion 461Y, 462Y may be smaller than the length of the main body portion 461X, 462X. The movable portion 461Y, 462Y is only required to be provided on at least one corner of the main body portion 461X, 462X of the first surface 460A.

The upper surface 461YX of the movable portion 461Y is joined to the exterior film 50 by, for example, heat sealing. The lower surface 462YX of the movable portion 462Y is joined to the exterior film 50 by, for example, heat sealing. In the electrical storage device 410 according to the third modification, the terminal sealing portion 90 can be omitted.

### <4-2. Action and effect of electrical storage device>

The electrical storage device 410 according to the third modification has the following action and effect as well as the same action and effect as the electrical storage device 10 according to the embodiment.

As shown in Fig. 11, in the electrical storage device 410, use for a long time may lead to an increase in internal pressure of the outer packaging 40 due to at least one of generation of gas and expansion of the electrode assembly 20. In a typical example, the outer packaging 40 and the electrode assembly 20 expand to a large extent in the UD direction. For example, when the electrode assembly 20 expands, the exterior film 50 is pressed by the electrode assembly 20. The upper surface 461YX of the movable portion 461Y is joined to the exterior film 50. Therefore, with an increase in internal pressure of the outer packaging 40, the movable portion 461Y rotates with respect to the main body portion 461X so as to separate from the first surface 460A with the upper end of the first surface 460A as a rotation center. The lower surface 462YX of the movable portion 462Y is joined to the exterior film 50. Therefore, with an increase in internal pressure of the outer packaging 40, the movable portion 462Y rotates with respect to the main body portion 462X so as to separate from the first surface 460A with the lower end of the first surface 460A as a rotation center. In the electrical storage device 410, peeling of the exterior film 50 from the reinforcement component 460 is suppressed even if the internal pressure of the outer packaging 40 increases.

### [5. Fourth modification of embodiment]

An electrical storage device 510 according to a fourth modification of the embodiment (hereinafter, referred to as a "fourth modification") has the same configuration as in the embodiment except that a reinforcement component 560 is provided. Hereinafter, the electrical storage device 510 according to the fourth modification will be described mainly for portions different from those in the embodiment.

### <5-1. Configuration of electrical storage device>

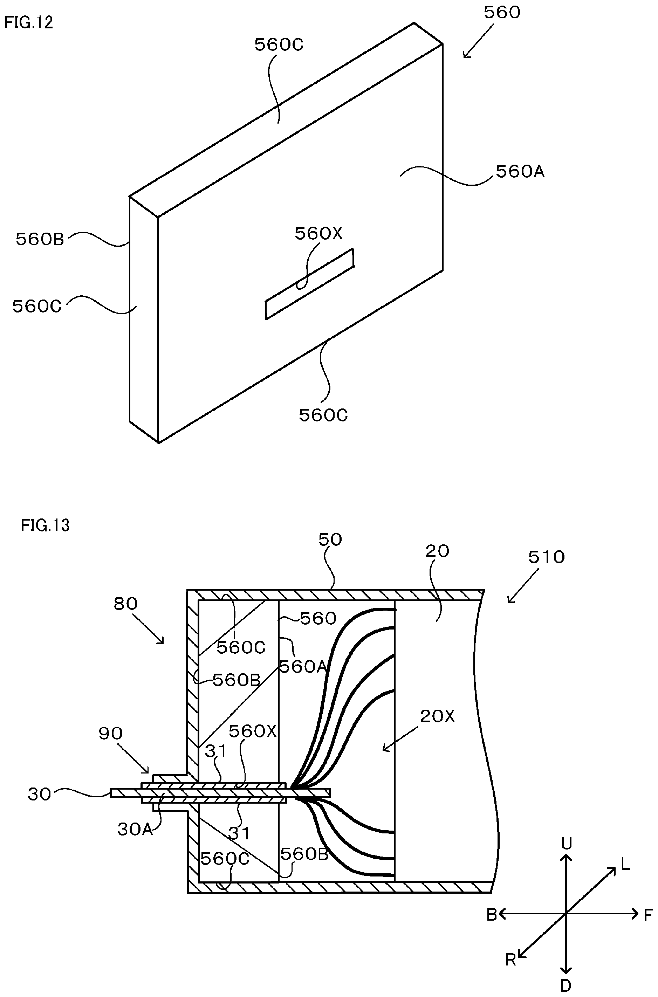

Fig. 12 is a perspective view of the reinforcement component 560 of the electrical storage device 510 according to the fourth modification. Fig. 13 is a sectional view of the electrical storage device 510.

As shown in Fig. 12, the reinforcement component 560 has, for example, a plate shape, and has a first surface 560A facing the electrode assembly 20, a second surface 560B that is opposite to the first surface 560A, and a lateral surface 560C connecting the first surface 560A and the second surface 560B.

A hole 560X extending through the first surface 560A and the second surface 560B is formed at the center of the reinforcement component 560. The size of the hole 560X is slightly larger than that of the electrode terminal 30. In the fourth modification, the electrode terminal 30 connected to the electrode assembly 20 is inserted into the hole 560X of the reinforcement component 560 in the fourth step of the method for manufacturing the electrical storage device 510 (see Fig. 6). In the fourth modification, when a gap is generated between the adhesion film 31 and the hole 560X, the gap is preferably filled with a resin material such as hot melt. In the electrical storage device 510 according to the fourth modification, the terminal sealing portion 90 can be omitted.

The electrical storage device 510 according to the fourth modification has the same action and effect as the electrical storage device 10 according to the embodiment. Further, according to the electrical storage device 510, the reinforcement component 560 has high strength because the reinforcement component 560 is not separated. Therefore, even if stress acts on the reinforcement component 560 due to vibration or the like, damage of the reinforcement component 560 is suppressed.

### [6. Fifth modification of embodiment]

An electrical storage device 610 according to a fifth modification of the embodiment (hereinafter, referred to as a "fifth modification") has the same configuration as in the embodiment except that a reinforcement component 660 is provided. Hereinafter, the electrical storage device 610 according to the fifth modification will be described mainly for portions different from those in the embodiment.

### <6-1. Configuration of electrical storage device>

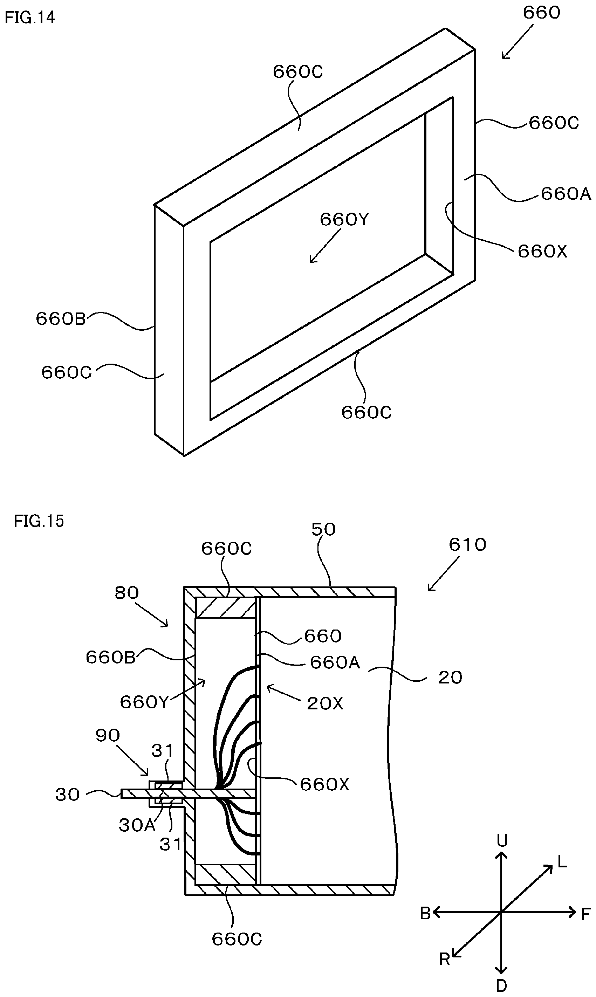

Fig. 14 is a perspective view of the reinforcement component 660 of the electrical storage device 610 according to the fifth modification. Fig. 15 is a sectional view of the electrical storage device 610.

As shown in Fig. 14, the reinforcement component 660 is a frame, and has a first surface 660A facing the electrode assembly 20, a second surface 660B that is opposite to the first surface 660A, and a lateral surface 660C connecting the first surface 660A and the second surface 660B.

A hole 660X extending through the first surface 660A and the second surface 660B is formed at the center of the reinforcement component 660. The size of the hole 660X is sufficiently large with respect to the electrode terminal 30. Inside the hole 660X, a space 660Y is formed in which at least a part of the current collector 20X is disposed. In the fifth modification, substantially the whole of the current collector 20X is disposed in the space 660Y.

In the fifth modification, the electrode terminal 30 connected to the electrode assembly 20 is inserted into the hole 660X of the reinforcement component 660 in the fourth step of the method for manufacturing the electrical storage device 610 (see Fig. 6). In the fifth modification, the reinforcement component 660 and the electrode terminal 30 are not joined in the fourth step because the hole 660X is sufficiently large in size with respect to the electrode terminal 30. Therefore, in the second step of the method for manufacturing the electrical storage device 610 (see Fig. 6), the adhesion film 31 is preferably joined only to a portion of the electrode terminal 30 which is joined to the exterior film 50. In the electrical storage device 610 according to the fifth modification, the terminal sealing portion 90 can be omitted.

### <6-2. Action and effect of electrical storage device>

The electrical storage device 610 according to the fifth modification has the same action and effect as the electrical storage device 10 according to the embodiment. Further, in the electrical storage device 610, the distance between the reinforcement component 660 and the electrode assembly 20 in the FB direction can be reduced because at least a part of the current collector 20X is housed in the space 660Y of the reinforcement component 660. Therefore, the electrical storage device 610 can be downsized.

### [7. Sixth modification of embodiment]

An electrical storage device 710 according to a sixth modification of the embodiment (hereinafter, referred to as a "sixth modification") has the same configuration as in the embodiment except that a reinforcement component 760 is provided. Hereinafter, the electrical storage device 710 according to the sixth modification will be described mainly for portions different from those in the embodiment.

### <7-1. Configuration of electrical storage device>

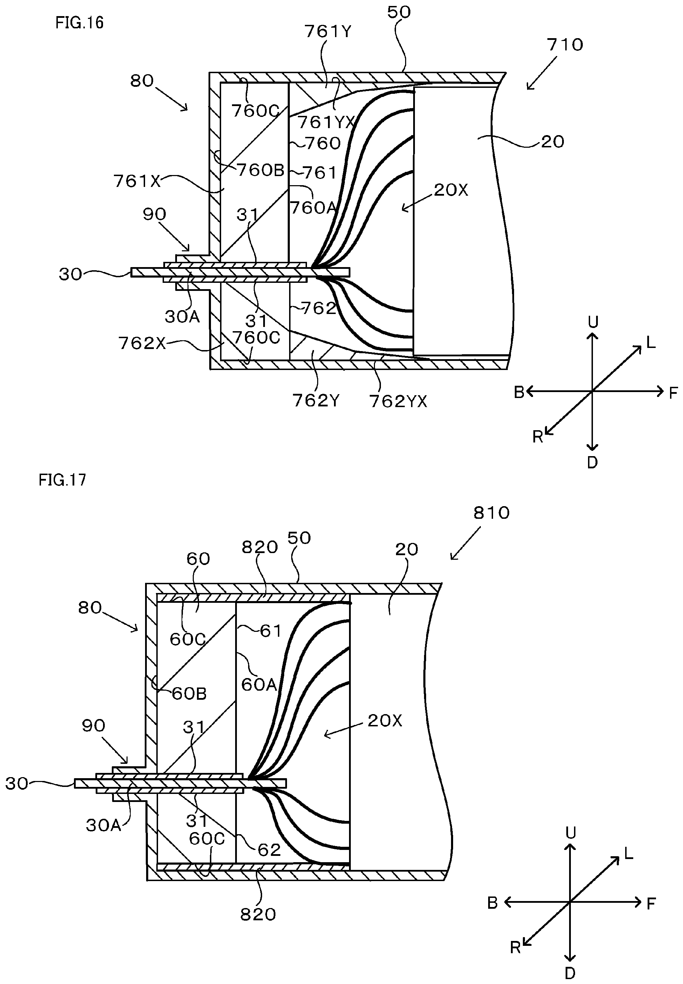

Fig. 16 is a sectional view of the electrical storage device 710 according to the sixth modification. The reinforcement component 760 includes a separate first part 761 and second part 762. The reinforcement component 760 is a lid that seals the lateral side of the electrode assembly 20. Depending on the shape of the reinforcement component 760, stress may be concentrated on an interface between the reinforcement component 760 and the electrode assembly 20, leading to damage of the exterior film 50. If the exterior film 50 is damaged, the electrode assembly 20 can not be suitably sealed. The electrical storage device 710 according to the sixth modification is configured to be capable of suitably sealing the electrode assembly 20. The first part 761 is disposed on the lower side with respect to the second part 762. The reinforcement component 760 has a first surface 760A facing the electrode assembly 20, a second surface 760B that is opposite to the first surface 760A, and a lateral surface 760C connecting the first surface 760A and the second surface 760B, in a state where the first part 761 and the second part 762 are combined.

The first part 761 includes a main body portion 761X, and a stretched portion 761Y extending toward the electrode assembly 20 from the main body portion 761X. The second part 762 includes a main body portion 762X, and a stretched portion 762Y extending toward the electrode assembly 20 from the main body portion 762X. The main body portions 761X and 762X form the first surface 760A, the second surface 760B and the lateral surface 760C. The main body portion 761X, 762X and the stretched portion 761Y, 762Y may be integrally formed, or may be separately formed and joined.

The stretched portion 761Y extends toward the electrode assembly 20 from a portion including the upper end of the first surface 760A. The stretched portion 761Y tapers with decreasing distance from the electrode assembly 20. The upper surface 761YX of the stretched portion 761Y is preferably joined to the exterior film 50 by, for example, heat sealing. Since a wider area of the reinforcement component 760 and the exterior film 50 are joined, the reinforcement component 760 and the exterior film 50 are more firmly joined. The upper surface 761YX is not required to be joined to the exterior film 50. The tip end of the stretched portion 761Y covers a part of the electrode assembly 20.

The stretched portion 762Y extends toward the electrode assembly 20 from a portion including the lower end of the first surface 760A. The stretched portion 762Y tapers with decreasing distance from the electrode assembly 20. The lower surface 762YX of the stretched portion 762Y is preferably joined to the exterior film 50 by, for example, heat sealing. Since a wider area of the reinforcement component 760 and the exterior film 50 are joined, the reinforcement component 760 and the exterior film 50 are more firmly joined. The lower surface 762YX is not required to be joined to the exterior film 50. The tip end of the stretched portion 762Y covers a part of the electrode assembly 20.

In the LR direction, the relationship between the length of the stretched portion 761Y, 762Y and the length of the main body portion 761X, 762X can be arbitrarily selected. In the sixth modification, the length of the stretched portion 761Y, 762Y is substantially equal to the length of the main body portion 761X, 762X in the LR direction. In the LR direction, the length of the stretched portion 761Y, 762Y may be smaller than the length of the main body portion 761X, 762X. In the electrical storage device 710 according to the sixth modification, the terminal sealing portion 90 can be omitted.

### <7-2. Action and effect of electrical storage device>

The electrical storage device 710 according to the sixth modification has the same action and effect as the electrical storage device 10 according to the embodiment. Further, in the electrical storage device 710, concentration of stress on an interface between the reinforcement component 760 and the electrode assembly 20 is suppressed because the stretched portions 761Y and 762Y taper with decreasing distance from the electrode assembly 20. Therefore, damage of the exterior film 50 is suppressed.

### [8. Seventh modification of embodiment]

An electrical storage device 810 according to a seventh modification of the embodiment (hereinafter, referred to as a "seventh modification") has the same configuration as in the embodiment except that a buffering film 820 is provided. Hereinafter, the electrical storage device 810 according to the seventh modification will be described mainly for portions different from those in the embodiment.

### <8-1. Configuration of electrical storage device>

Fig. 17 is a sectional view of the electrical storage device 810 according to the seventh modification. If the strength of the exterior film 50 is low, pinholes may be generated in the exterior film 50. If pinholes are generated in the exterior film 50, the electrode assembly 20 can not be suitably sealed. The electrical storage device 810 according to the seventh modification is configured to be capable of suitably sealing the electrode assembly 20. The electrical storage device 810 includes the buffering film 820 for enhancing the strength of the exterior film 50. The buffering film 820 is disposed inside the exterior film 50. For suppressing generation of pinholes in the exterior film 50, the buffering film 820 is disposed on at least one of a corner of the electrode assembly 20 and a corner of the reinforcement component 60. In the seventh modification, the buffering film 820 is disposed at all corners of the electrode assembly 20 and all corners of the reinforcement component 60. The material for forming the buffering film 820 is, for example, a polyester-based material, a polyolefin-based material or a fluorine-based material. In the electrical storage device 810 according to the seventh modification, the terminal sealing portion 90 can be omitted.

### <8-2. Action and effect of electrical storage device>

The electrical storage device 810 according to the seventh modification has the same action and effect as the electrical storage device 10 according to the embodiment. Further, in the electrical storage device 810, the strength of the exterior film 50 is enhanced because the buffering film 820 is provided. Therefore, generation of pinholes in the exterior film 50 is suppressed.

### [9. Eighth modification of embodiment]

An electrical storage device 910 according to an eighth modification of the embodiment (hereinafter, referred to as an "eighth modification") has the same configuration as in the embodiment except that an exterior film 950 is provided. Hereinafter, the electrical storage device 910 according to the eighth modification will be described mainly for portions different from those in the embodiment.

### <9-1. Configuration of electrical storage device>

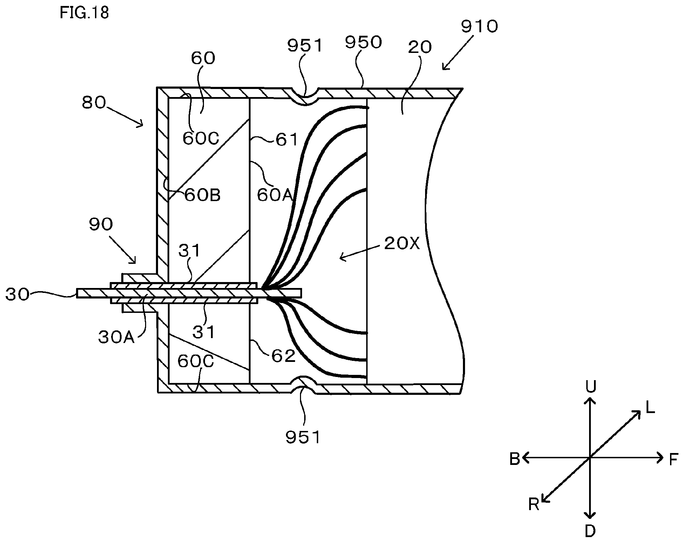

Fig. 18 is a sectional view of the electrical storage device 910 according to the eighth modification. The electrical storage device 910 includes the exterior film 950. If the internal pressure of the outer packaging 40 increases, the exterior film 950 may peel from the reinforcement component 60. If the exterior film 950 peels from the reinforcement component 60, the electrode assembly 20 can not be suitably sealed. The electrical storage device 910 according to the eighth modification is configured to be capable of suitably sealing the electrode assembly 20. The exterior film 950 includes an expansion portion 951 located between the electrode assembly 20 and the reinforcement component 60. The expansion portion 951 is configured to be capable of expanding if the outer packaging 40 expands with an increase in internal pressure of the outer packaging 40. The shape of the expansion portion 951 can be arbitrarily selected as long as it enables expansion. In the eighth modification, the expansion portion 951 has a curved shape that protrudes downward toward the electrode terminal 30. The expansion portion 951 may be a corner protruding downward toward the electrode terminal 30, or may have a bellows shape. The expansion portion 951 is not required to protrude downward, and may be a portion which is bent to an extent that enables expansion. In the electrical storage device 910 according to the eighth modification, the terminal sealing portion 90 can be omitted.

### <9-2. Action and effect of electrical storage device>

The electrical storage device 910 according to the eighth modification has the same action and effect as the electrical storage device 10 according to the embodiment. Further, in the electrical storage device 910, since the exterior film 50 includes the expansion portion 951, peeling of the exterior film 950 from the reinforcement component 60 is suppressed even if the internal pressure of the outer packaging 40 increases.

### [10. Other modifications]

The above-described embodiment and modifications are examples of possible forms of an electrical storage device, a reinforcement component and a method for manufacturing an electrical storage device according to the present invention, and is not intended to limit the forms thereof. The electrical storage device, the reinforcement component and the method for manufacturing an electrical storage device according to the present invention may have a form different from that exemplified in the embodiment and modifications. An example thereof is a form in which a part of the configuration of the embodiment and modifications is replaced, changed or omitted, or a form in which a new configuration is added to the embodiment and modifications. Some examples of other modifications of the embodiment and modifications will be described below. Note that the above embodiment and modifications, and the following other modifications can be combined as long as they are not technically contradictory.

<10-1>
In the electrical storage device 10 according to the embodiment, the reinforcement component 60 is not required to be separated into the first part 61 and the second part 62. In this modification, in the method for manufacturing the electrical storage device 10 as shown in Fig. 6, the first step may be omitted, and the reinforcement component 60 may be insert molded on the electrode terminal 30 connected to the electrode assembly 20 in the fourth step. In the fourth step, a thermal insulation material for protecting the electrode assembly 20 is preferably disposed between the electrode assembly 20 and a portion on which the reinforcement component 60 is formed. The thermal insulation material is preferably removed after the fourth step. This modification can also be applied to the fourth modification.

<10-2>
In the electrical storage device 10 according to the embodiment, one of the two electrode terminals 30 is not required to be joined to the exterior film 50. In other words, one of the two electrode terminals 30 is not required to include the terminal sealing portion 90. For example, the second sealing portion 80 may be formed on one of the two electrode terminals 30 in which the terminal sealing portion 90 is not formed. That is, the electrical storage device 10 is only required to include at least one terminal sealing portion 90. In first to eighth modifications, two terminal sealing portions 90 may be omitted.

<10-3>
In the electrical storage device 10 according to the embodiment, two electrode terminals 30 may protrude from one of the two reinforcement components 60. In this modification, a portion of the outer packaging 40 where the other reinforcement component 60 is disposed can be sealed by a known method. For example, a portion where the other reinforcement component 60 is disposed may be sealed with a known reinforcement component formed as one part, or the other reinforcement component 60 may be omitted, and the exterior film 50 may be folded to seal the electrode assembly 20. This modification can also be applied to first to eighth modifications.

<10-4>
**In electrical** storage device 10 of the embodiment, exterior film 50 may be a laminate (laminate film) including the heat-sealable resin layers 53 on both surfaces of the barrier layer 52. In this modification, the first sealing portion 70 may be formed by heat-sealable resin layers 53 laminated on one side or the other side of the barrier layer 52, or may be formed by heat-sealing the heat-sealable resin layer 53 laminated on one side and the heat-sealable resin layer 53 laminated on the other side of the barrier layer 52. In this modification, the root 70X of the first sealing portion 70 is located on an arbitrary surface of the outer packaging 40. In this modification, it is preferable that the root 70X of the first sealing portion 70 is located on a side 43 which is a boundary between the first surface 41 and the second surface 42. In this modification, the heat-sealable resin layer 53 may be joined to, for example, the barrier layer 52 with an adhesive layer 55 interposed therebetween. This modification can also be applied to first to eighth modifications.

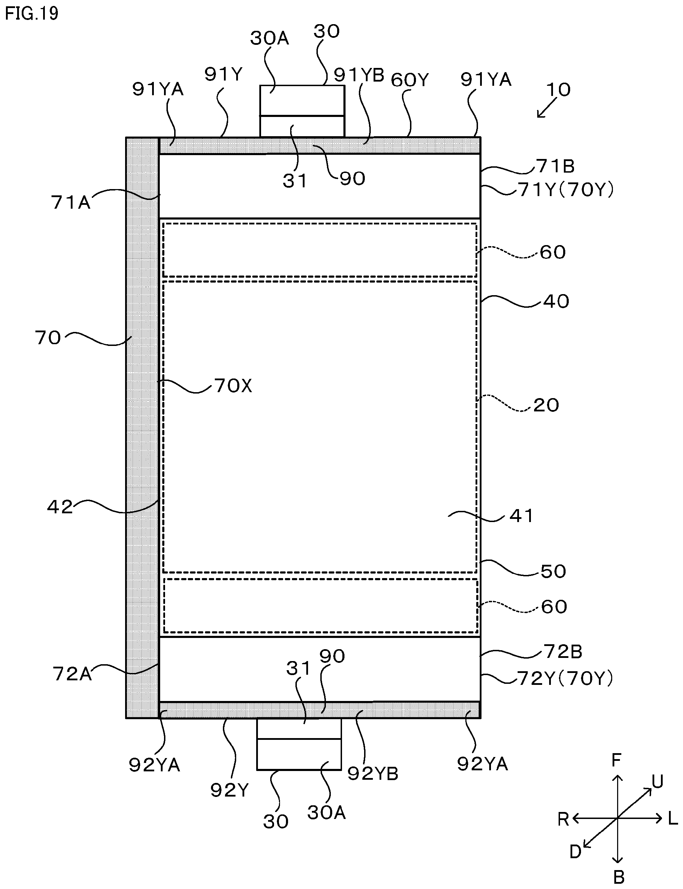

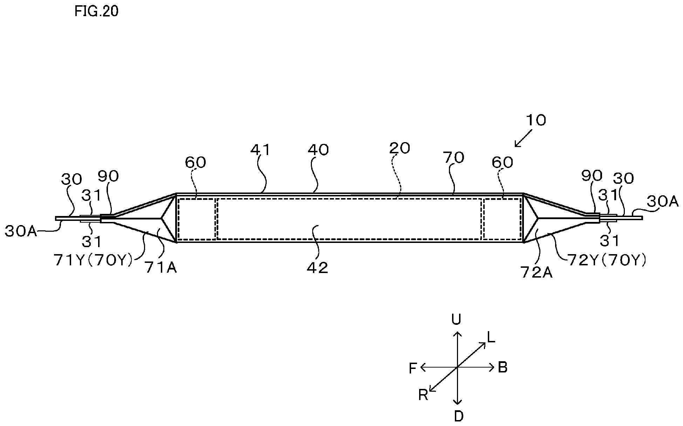

<10-5>
In the electrical storage device 10 according to the embodiment, the shape of the appearance of the outer packaging 40 can be arbitrarily changed. Fig. 19 is a plan view of the electrical storage device 10 according to a modification. Fig. 20 is a side view of the electrical storage device 10 of Fig. 19.

In the electrical storage device 10 according to this modification, the exterior film 50 is wound around the electrode assembly 20 so as to have a bulging portion 70Y protruding outward with respect to the electrode assembly 20. With the exterior film 50 wound around the electrode assembly 20 so as to have the bulging portion 70Y, surfaces of the exterior film 50 which face each other (heat-sealable resin layers 53) are heat-sealed to form a seal portion 60Y. In the present modification, the bulging portion 70Y includes a first bulging portion 71Y and a second bulging portion 72Y. The electrode assembly 20 and the reinforcement component 60 are located between the first bulging portion 71Y and the second bulging portion 72Y.

The first bulging portion 71Y faces the second bulging portion 72Y with the electrode assembly 20 and the reinforcement component 60 interposed therebetween. The first bulging portion 71Y includes a pair of lateral portions 71A and 71B in a lateral direction of the outer packaging 40 in plan view. The second bulging portion 72Y includes a pair of lateral portions 72A and 72B in a lateral direction of the outer packaging 40 in plan view. In the present modification, the lateral portions 71A, 71B, 72A and 72B are folded inward so that the heat-sealable resin layers (inner surfaces) of the exterior film 50 face each other. In other words, the lateral portions 71A, 71B, 72A and 72B are folded inward so that the base material layers 51 (outer surfaces) of the exterior film 50 face each other. In the present modification, the outer packaging 40 is a so-called gable top-type pouch.

The seal portion 60Y includes a first bulging seal portion 91Y and a second bulging seal portion 92Y. The first bulging seal portion 91Y is formed in the first bulging portion 71Y. The first bulging seal portion 91Y extends in a lateral direction of the outer packaging 40. The first bulging seal portion 91Y includes a pair of lateral seal portions 91YA, and a central seal portion 91YB. The pair of lateral seal portions 91YA is a portion in which the heat-sealable resin layers 53 of a pair of folded lateral portions 71A and 71B are heat-sealed. The central seal portion 91YB is a portion located between the pair of lateral seal portions 91YA. The central seal portion 91YB is sealed in a state of sandwiching the electrode terminal 30. A portion of the exterior film 50 in which the first bulging portion 71Y and the electrode terminal 30 are joined forms the terminal sealing portion 90.

The second bulging seal portion 92Y is formed in the second bulging portion 72Y. The second bulging seal portion 92Y extends in a lateral direction of the outer packaging 40. The second bulging seal portion 92Y includes a pair of lateral seal portions 92YA, and a central seal portion 92YB. The pair of lateral seal portions 92YA is a portion in which the heat-sealable resin layers of a pair of folded lateral portions 72A and 72B are heat-sealed. The central seal portion 92YB is a portion located between the pair of lateral seal portions 92YA. The central seal portion 92YB is sealed in a state of sandwiching two of the electrode terminals 30. A portion of the exterior film 50 in which the second bulging portion 72Y and the electrode terminal 30 are joined forms the terminal sealing portion 90.

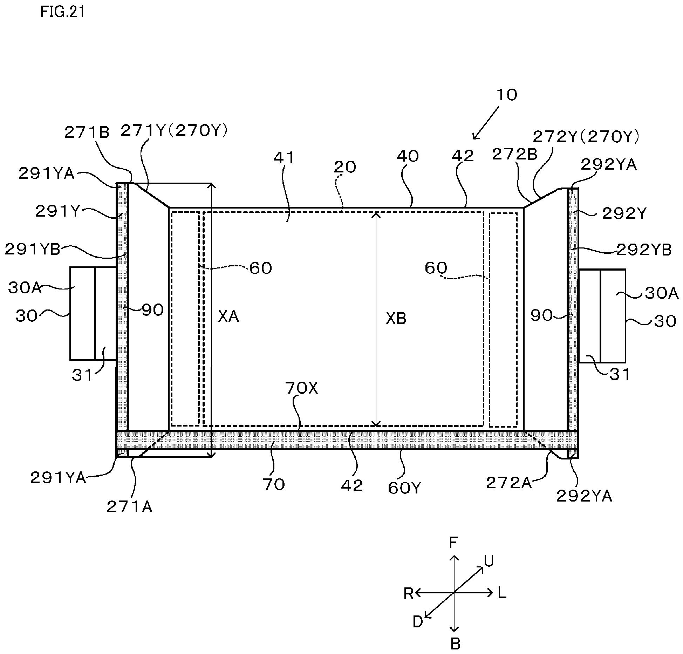

Fig. 21 is a plan view of the electrical storage device 10 according to another modification of the embodiment. The electrical storage device 10 of this modification includes a bulging portion 270Y. The first bulging portion 270Y includes a first bulging portion 271Y and a second bulging portion 272Y which face each other with the electrode assembly 20 and the reinforcement component 60 interposed therebetween. The first bulging portion 271Y includes a pair of lateral portions 271A and 271B in a lateral direction of the outer packaging 40 in plan view. The second bulging portion 272Y includes a pair of lateral portions 272A and 272B in a lateral direction of the outer packaging 40 in plan view. In the present modification, the lateral portions 271A, 271B, 272A and 272B are such that unlike the modifications shown in Fig. 19 and the like, an exterior film 50 is not folded inward so that the inner surfaces of the exterior film 50 face each other. When unfolded, the bulging portion 270 has a width XA larger than a width XB of the electrode assembly 20. In the present modification, the outer packaging 40 is a so-called brick-type pouch.

The bulging seal portion 290Y includes a first bulging seal portion 291Y and a second bulging seal portion 292Y. The first bulging seal portion 291Y is formed in the first bulging portion 271Y. The first bulging seal portion 291 extends in a lateral direction of the outer packaging 40. The first bulging seal portion 291Y includes a pair of lateral seal portions 291A, and a central seal portion 291B. The pair of lateral seal portions 291A is a portion in which the heat-sealable resin layers 53 of portions of the exterior film 50 which are located outside the end part of the electrode assembly 20 in the width direction are heat-sealed to each other. The central seal portion 291B is a portion located between the pair of lateral seal portions 291A. The central seal portion 291B is sealed in a state of sandwiching the electrode terminal 30. A portion of the exterior film 50 in which the first bulging portion 271Y and the electrode terminal 30 are joined forms the terminal sealing portion 90.

The second bulging seal portion 292Y is formed in the second bulging portion 272Y. The second bulging seal portion 292Y extends in a lateral direction of the outer packaging 40. The second bulging seal portion 292Y includes a pair of lateral seal portions 292A, and a central seal portion 292B. The pair of lateral seal portions 292A is a portion in which the heat-sealable resin layers 53 of portions of the exterior film 50 which are located outside the end part of the electrode assembly 20 in the width direction are heat-sealed to each other. The central seal portion 292B is a portion located between the pair of lateral seal portions 292A. The central seal portion 292B is sealed in a state of sandwiching two of the electrode terminals 30. A portion of the exterior film 50 in which the second bulging portion 272Y and the electrode terminal 30 are joined forms the terminal sealing portion 90. The modifications related to Figs. 19 to 21 can also be applied to first to eighth modifications.

< 10-6>
In the electrical storage device 10 according to the embodiment, the electrode assembly 20 and the reinforcement component 60 may be packaged by winding one exterior film 50, but may be packaged by joining two or more exterior films 50. This modification can also be applied to first to eighth modifications.

<10-7>
In the electrical storage device 10 according to the embodiment, the reinforcement component 60 and the exterior film 50 may be joined with an adhesion film interposed therebetween for more suitably joining the reinforcement component 60 and the exterior film 50. The specifications about the adhesion film according to this modification are similar to the specifications about the adhesion film 31. Particularly, when the material forming the reinforcement component 60 contains metal, the reinforcement component 60 and the exterior film 50 are preferably joined with an adhesion film interposed therebetween. This modification can also be applied to first to eighth modifications.

< 10-8>
In the electrical storage device 10 according to the embodiment, the reinforcement component 60 is made from a resin material, but the reinforcement component 60 can be made from another material. The reinforcement component 60 may be made from, for example, a ceramic or glass. Examples of the ceramic include alumina-based ceramics, zirconia-based ceramics, silicon carbide-based ceramics, forsterite-based ceramics, silicon nitride-based ceramics, steatite, cordierite, sialon, ferrite, barium titanate, and mullite.

### Reference Signs List

10, 210, 310, 410, 510, 610, 710, 810, 910 Electrical storage device
20 Electrode assembly
20X Current collector
30 Electrode terminal
30A Exposed portion
50, 950 Exterior film
60, 260, 360, 460, 560, 660, 760 Reinforcement component
61, 261, 361, 461, 761 First part
62, 262, 362, 462, 762 Second part
260X Concave portion
360B Second surface
461X, 462X Main body portion
461Y, 462Y Movable portion
560X, 660X Hole
660Y Space
761X, 762X Main body portion
761Y, 762Y Stretched portion
820 Buffering film
951 Expansion portion
**THE FOLLOWING CLAUSES DESCRIBE FURTHER ASPECTS, FEATURES AND EMBODIMENTS OF THE PRESENT DISCLOSURE:**
[Clause 1] An electrical storage device comprising:
   an electrode assembly;
   an electrode terminal electrically connected to the electrode assembly;
   a reinforcement component disposed on a lateral side of the electrode assembly; and
   an exterior film packaging the electrode assembly and the reinforcement component, wherein
   the electrode terminal includes an exposed portion which is a portion exposed to an outside on a side opposite to the electrode assembly with respect to the reinforcement component, and
   a part of the exposed portion is joined to the exterior film.
[Clause 2] The electrical storage device according to Clause 1, wherein the reinforcement component includes at least a separate first part and second part.
[Clause 3] The electrical storage device according to Clause 1 or 2, wherein
   the electrode assembly includes a current collector, and
   the reinforcement component includes a concave portion in which the current collector is housed.
[Clause 4] The electrical storage device according to Clause 1 or 2, wherein
   the electrode assembly includes a current collector, and
   the reinforcement component is a frame having a space in which the current collector is disposed.
[Clause 5] The electrical storage device according to Clause 1 or 2, wherein the reinforcement component has a plate shape, and has a hole into which the electrode terminal is inserted.
[Clause 6] The electrical storage device according to Clause 1 or 2, wherein
   the reinforcement component includes a main body portion, and a movable portion connected to the main body portion and joined to the exterior film, and
   the movable portion is configured to move with respect to the main body portion when the exterior film expands with an increase in internal pressure of the electrical storage device.
[Clause 7] The electrical storage device according to Clause 1 or 2, wherein
   the reinforcement component includes a first surface facing the electrode assembly, and a second surface connected to the first surface and extending in a direction opposite to the electrode assembly, and
   the second surface slopes toward a center of the reinforcement component in a height direction with increasing distance in the direction opposite to the electrode assembly.
[Clause 8] The electrical storage device according to Clause 1 or 2, wherein the reinforcement component includes a main body portion, and a stretched portion extending toward the electrode assembly from the main body portion, and
   the stretched portion tapers with decreasing distance from the electrode assembly.
[Clause 9] The electrical storage device according to Clause 1 or 2, comprising a buffering film disposed inside the exterior film and intended to enhance strength of the exterior film, wherein the buffering film is disposed on at least one of a corner of the electrode assembly and a corner of the reinforcement component.
[Clause 10] The electrical storage device according to Clause 1 or 2, wherein
   the electrode assembly and the reinforcement component are disposed separately,
   the exterior film includes an expansion portion located at a portion between the electrode assembly and the reinforcement component, and the expansion portion is configured to be capable of expanding when the exterior film expands with an increase in internal pressure of the electrical storage device.
[Clause 11] An electrical storage device comprising:
   an electrode assembly;
   an electrode terminal electrically connected to the electrode assembly;
   a reinforcement component disposed on a lateral side of the electrode assembly; and
   an exterior film packaging the electrode assembly and the reinforcement component, wherein
   the reinforcement component includes a main body portion, and a movable portion connected to the main body portion and joined to the exterior film, and
   the movable portion is configured to move with respect to the main body portion when the exterior film expands with an increase in internal pressure of the electrical storage device.
[Clause 12] An electrical storage device comprising:
   an electrode assembly;
   an electrode terminal electrically connected to the electrode assembly;
   a reinforcement component disposed on a lateral side of the electrode assembly; and
   an exterior film packaging the electrode assembly and the reinforcement component, wherein
   the reinforcement component includes a first surface facing the electrode assembly, and a second surface connected to the first surface and extending in a direction opposite to the electrode assembly, and
   the second surface slopes toward a center of the reinforcement component in a height direction with increasing distance in the direction opposite to the electrode assembly.
[Clause 13] An electrical storage device comprising:
   an electrode assembly;
   an electrode terminal electrically connected to the electrode assembly;
   a reinforcement component disposed on a lateral side of the electrode assembly; and
   an exterior film packaging the electrode assembly and the reinforcement component, wherein
   the reinforcement component includes a main body portion, and a stretched portion extending toward the electrode assembly from the main body portion, and
   the stretched portion tapers with decreasing distance from the electrode assembly.
[Clause 14] An electrical storage device comprising:
   an electrode assembly;
   an electrode terminal electrically connected to the electrode assembly;
   a reinforcement component disposed on a lateral side of the electrode assembly;
   an exterior film packaging the electrode assembly and the reinforcement component; and
   a buffering film disposed inside the exterior film and intended to enhance strength of the exterior film, wherein
   the buffering film is disposed on at least one of a corner of the electrode assembly and a corner of the reinforcement component.
[Clause 15] An electrical storage device comprising:
   an electrode assembly;
   an electrode terminal electrically connected to the electrode assembly;
   a reinforcement component disposed on a lateral side of the electrode assembly; and
   an exterior film packaging the electrode assembly and the reinforcement component, wherein
   the electrode assembly and the reinforcement component are disposed separately,
   the exterior film includes an expansion portion located at a portion between the electrode assembly and the reinforcement component, and
   the expansion portion is configured to be capable of expanding when the exterior film expands with an increase in internal pressure of the electrical storage device.
[Clause 16] The electrical storage device according to any one of Clauses 11 to 15, wherein the reinforcement component includes at least a separate first part and second part.
[Clause 17] The electrical storage device according to any of Clauses 11 to 15, wherein the electrode assembly includes a current collector, and
   the reinforcement component includes a concave portion in which the current collector is housed.
[Clause 18] The electrical storage device according to any one of Clauses 11 to 15, wherein the reinforcement component has a plate shape, and has a hole into which the electrode terminal is inserted.
[Clause 19] A reinforcement component used for the electrical storage device according to Clause 1, 2, 11, 12, 13, 14 or 15.
[Clause 20] The reinforcement component according to Clause 19, to which the electrode terminal is joined.
[Clause 21.] The method for manufacturing an electrical storage device, in which the electrical storage device includes:
   an electrode assembly;
   an electrode terminal electrically connected to the electrode assembly;
   a reinforcement component disposed on a lateral side of the electrode assembly; and
   an exterior film packaging the electrode assembly and the reinforcement component,
   the electrode terminal includes an exposed portion which is a portion exposed to an outside on a side opposite to the electrode assembly with respect to the reinforcement component,
   a part of the exposed portion is joined to the exterior film,
   the method comprising:
      a connection step of electrically connecting the electrode assembly and the electrode terminal;
      a disposition step of disposing the reinforcement component so as to form the exposed portion after the connection step;
      a packaging step of packaging the reinforcement component and the electrode assembly with the exterior film after the disposition step; and
      a sealing step of joining the exterior film and the exposed portion after the packaging step.
[Clause 22] The method for manufacturing an electrical storage device according to Clause 21, wherein in the disposition step, the reinforcement component is insert molded on the electrode terminal connected to the electrode assembly.

## Claims

1. An electrical storage device comprising:
an electrode assembly;
an electrode terminal electrically connected to the electrode assembly;
a reinforcement component disposed on a lateral side of the electrode assembly; and
an exterior film packaging the electrode assembly and the reinforcement component, wherein
the electrode assembly and the reinforcement component are disposed separately,
the exterior film includes an expansion portion located at a portion between the electrode assembly and the reinforcement component, and
the expansion portion is configured to be capable of expanding when the exterior film expands with an increase in internal pressure of the electrical storage device.

2. The electrical storage device according to claim 1, wherein the reinforcement component includes at least a separate first part and second part.

3. The electrical storage device according to any of claim 1or 2, wherein
the electrode assembly includes a current collector, and
the reinforcement component includes a concave portion in which the current collector is housed.

4. The electrical storage device according to any one of claims 1 to 3, wherein the reinforcement component has a plate shape, and has a hole into which the electrode terminal is inserted.

5. A reinforcement component used for the electrical storage device according to any one of claims 1 to 4.

6. The reinforcement component according to claim 5, to which the electrode terminal is joined.

7. A method for manufacturing an electrical storage device, in which the electrical storage device includes:
an electrode assembly;
an electrode terminal electrically connected to the electrode assembly;
a reinforcement component disposed on a lateral side of the electrode assembly; and
an exterior film packaging the electrode assembly and the reinforcement component, wherein
the electrode assembly and the reinforcement component are disposed separately,
the exterior film includes an expansion portion located at a portion between the electrode assembly and the reinforcement component, and
the expansion portion is configured to be capable of expanding when the exterior film expands with an increase in internal pressure of the electrical storage device,
the method comprising:
a connection step of electrically connecting the electrode assembly and the electrode terminal; and
a disposition step of disposing the reinforcement component after the connection step;
a packaging step of packaging the reinforcement component and the electrode assembly with the exterior film after the disposition step.

8. The method for manufacturing an electrical storage device according to claim 7, wherein in the disposition step, the reinforcement component is insert molded on the electrode terminal connected to the electrode assembly.
